# EUROPEAN PATENT SPECIFICATION

(11) **EP 0 364 586 B1**
(45) Date of publication and mention of the grant of the patent: **03.08.1994**
(21) Application number: 88910130.9
(22) Date of filing: 28.11.1988
(51) Int. Cl.: G11B 20/10, G11B 7/00, G11B 11/00

(54) **DISK RECORDING APPARATUS**
VORRICHTUNG ZUM AUFZEICHNEN AUF PLATTEN
APPAREIL D'ENREGISTREMENT SUR DISQUES

(30) Priority: 30.11.1987 JP 301845/87
(43) Date of publication of application: 25.04.1990
(73) Proprietor: SONY CORPORATION, Tokyo 141 (JP)
(72) Inventor: MAEDA, Yasuaki Sony Corporation, Tokyo 141 (JP)
(74) Representative: Thomas, Christopher Hugo
(86) International application number: PCT/JP88/01201
(87) International publication number: WO 89/05509

(56) References cited:
- EP-A- 0 139 332

## Description

This invention relates to a disk recording apparatus in which continuous input data such as musical signals are recorded on a disk-like recording medium on the recording tracks of which predetermined absolute address information is recorded in advance. It is preferably applied to a recordable optical disk apparatus, such as the constant linear velocity (CLV) write once (WO) or erasable type optical disk apparatus.

The present Applicant has already proposed a disk recording apparatus according to which the information is recorded in a standardized compact disk (CD) data format, using a recordable disk, such as a magneto-optical disk, having a vertical magnetization film exhibiting a magneto-optical effect as the magnetic recording layer, as shown for example in PCT/JP87/00764.

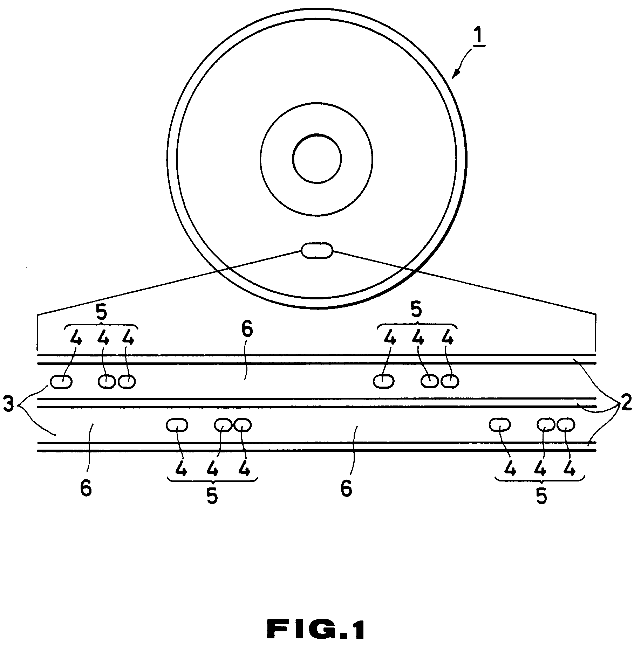

Referring to the diagrammatic view of Fig. 1, pre-recorded regions 5, in which a circumferentially extending pattern of projections and recesses is previously formed by pits 4, and data recording regions 6, in which the magneto-optical recording is performed, are arranged alternately at a constant pitch in each land region 3 defined between spirally extending pre-grooves 2 on a magneto-optical disk 1 which is used as the recording medium in the above disk recording apparatus.

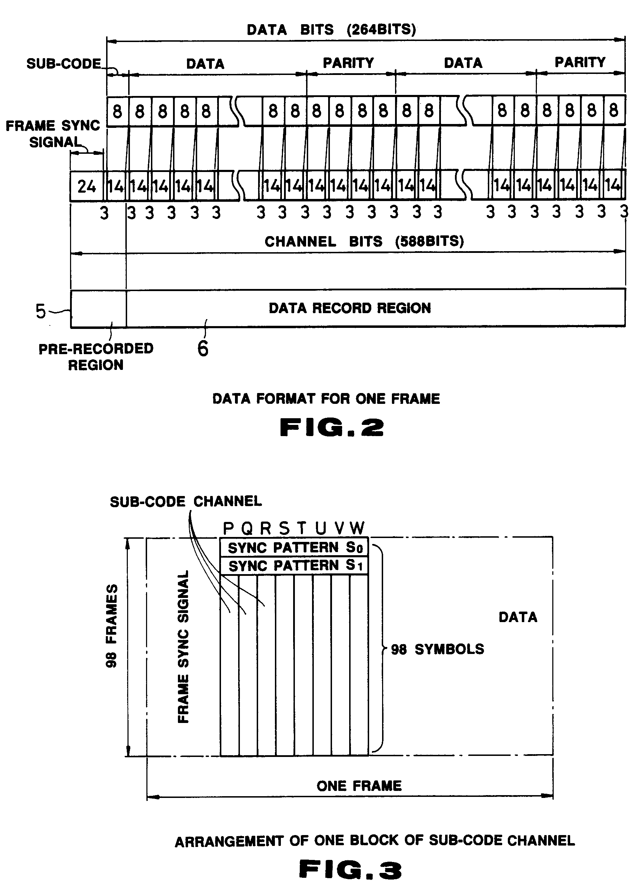

According to the standardized compact disk (CD) data format, the information data of each processing unit or frame are formed by 33 symbols (264 bits) made up of 24 symbols (12 words) each composed of eight bits, four symbols each of error correction codes P and Q, and a symbol as a sub-code for control or user data. The data bits of each frame are subjected to a so-called eight to fourteen modulation (EFM) so that the eight data bits of each symbol are converted into a 14-bit pattern to produce 14 x 33 bits or 33 symbols, to which 24-bit sync signals are annexed. Three merging bits each are placed between adjacent symbols to produce 588 channel bits which make up one frame as shown in Fig. 2. The eight bits of the aforementioned symbol annexed as control data or user data form sub-code channels P, Q, R, S, T, U, V and W for constituting a data block or a large frame composed of 98 symbols corresponding to 98 frames, as shown in Fig. 3. Meanwhile, the two symbols at the leading part of the block are dedicated to sync patterns S₀ and S₁ for demarcating the boundary of this data block.

In the above described magneto-optical disk 1, the frame sync signals and the sub-code of the 588 channel bits making up each frame are recorded in advance as a pattern of projections and recesses on the pre-recorded region 5 by moulding, and the absolute time or absolute address information from the start position of the data record region 6 is afforded by the Q-channel of the aforementioned sub-code.

In the above described disk recording apparatus, making use of the magneto-optical disk 1, data such as play information and parity are photomagnetically recorded on the data record region 6, while the disk rotation control is performed at a CLV or constant linear velocity on the basis of the reproduced output from the pre-recorded region 5 of the disk 1, and tracking servo as well as focusing servo is applied to the optical head.

In the above described disk recording apparatus, when the servo for the optical head is disturbed by some perturbation or malfunction, such as vibration or noises in the power source giving rise to abnormal conditions such as incorrect focussing servo control or track jumps, interrupted portions are produced in the data recorded on the magneto-optical disk at the time of occurrence of these abnormal conditions.

The present Applicant has already proposed a disk recording apparatus wherein track jumps are detected during the recording operation and, on occurrence of a track jump, the laser power of the optical head is lowered to the reproducing level. The optical head is then controlled to jump tracks to the desired track and operation is resumed on the desired track, thereby preventing the information being recorded in other than the desired track, as shown for example in PCT/JP88/00196.

When such an interruption of the recorded data occurs when the disk recording apparatus is used as a computer terminal, it is possible to re-read the recorded data by the communication exchange procedure with the host computer to effect re-recording from the leading end of the interrupted portion.

It is possible in this manner to lower the laser power of the optical head to the reproducing level, and to perform the track jump control to cause the recording operation to be resumed at the desired track, thereby preventing the information from being erroneously recorded in other than the desired track. However, when recording continuous data on a real time basis, as in live recording of a musical performance, the interrupted portion cannot actually be recovered. Even supposing that the optical head is returned immediately to the original recording track, the musical performance data is lost for the time interval which elapsed during control of the track jump. Thus, there is the risk that the listener will be irritated by the interruption of the musical performance upon reproduction.

In view of the foregoing, the present invention aims to provide a disk recording apparatus wherein, even when abnormal conditions such as incorrect focusing servo or track jump occur in the optical head during data recording, data loss may be avoided, thereby permitting data to be recorded correctly.

JP-A-61/139984 discloses an optical disk recording apparatus in which occurrence of a track jump is detected through amplification of a tracking error signal. Data to be recorded is written to a memory under control of a write address counter. A read address counter controls subsequent reading of the data from the memory for supply to a recording amplifier. The read address counter is connected by a gate circuit to a voltage-controlled oscillator (VCO) which, with a subtracting circuit, forms a phase-locked loop for keeping the phases of the write address counter and read address counter constant. On detection of a track jump, the read address counter is disconnected from the VCO by the gate circuit and recording is suspended. The apparatus then searches for the point of generation of the track jump on the basis of the presence or absence of an RF signal. On finding the point of generation, the gate circuit is closed and data is read out from the memory to resume recording. While this arrangement allows recording data to be protected, the necessary circuitry as described above is relatively complex.

According to the present invention there is provided disk recording apparatus in which predetermined input data are recorded on a disk-like recording medium on a recording track of which predetermined absolute address information is recorded in advance, the apparatus comprising: memory means for storing said input data; memory control means for controlling storage of the input data in the memory means and reading of the input data from the memory means: recording means for recording the input data read out from the memory means on the medium; and abnormal condition detection and control means for detecting an abnormal condition during a recording operation; characterised in that
the memory means comprises a plurality of series-connected first-in-first-out buffer memories having a data storage capacity corresponding to a predetermined recording unit of said input data and each having an output connected to a corresponding input of a data select circuit which, under control of the memory control means, selectively outputs data supplied to one of its inputs for supply to the recording means; and in that the abnormal condition detection and control means is arranged to monitor said absolute address information on said recording track during a recording operation, to detect an abnormal condition based on said absolute address information, and to calculate, on occurrence of said abnormal condition, the return time required for said recording means to return to the leading position on the recording track of the recording unit that is being recorded on the track, the memory control means being arranged to control the data select circuit to output data from the input thereof which is in advance of the previously selected input by a number of said recording units corresponding to the calculated return time.

According to the present invention, therefore, the predetermined recording units of the input data are sequentially stored in each of the buffer memories under control of the memory control means. The input data is read out from an arbitrary buffer memory so that each predetermined recording unit of the input data is recorded on a recording track of the medium. Abnormal condition detection means monitors the absolute address information obtained from the recording track during recording, and, when an abnormal condition is detected, the return time required for the recording means to return to the leading position on the recording track of the recording unit being recorded is calculated. The data select circuit is then controlled so that the input data is read out from the buffer memory which is in advance of that from which the input data was previously read out by a number of recording units corresponding to the calculated return time. Thus, loss of data to be recorded may be prevented.

An embodiment of the present invention will be hereinafter described by reference to the drawings in which:
Fig. 1 is a diagrammatic view of a recording format of a CD system magneto-optical disk; Fig. 2 is a diagrammatic view showing the data format for one frame of data recorded on the magneto-optical disk; Fig. 3 is a diagrammatic view showing the arrangement of one block of sub-code channels recorded on the magneto-optical disk;

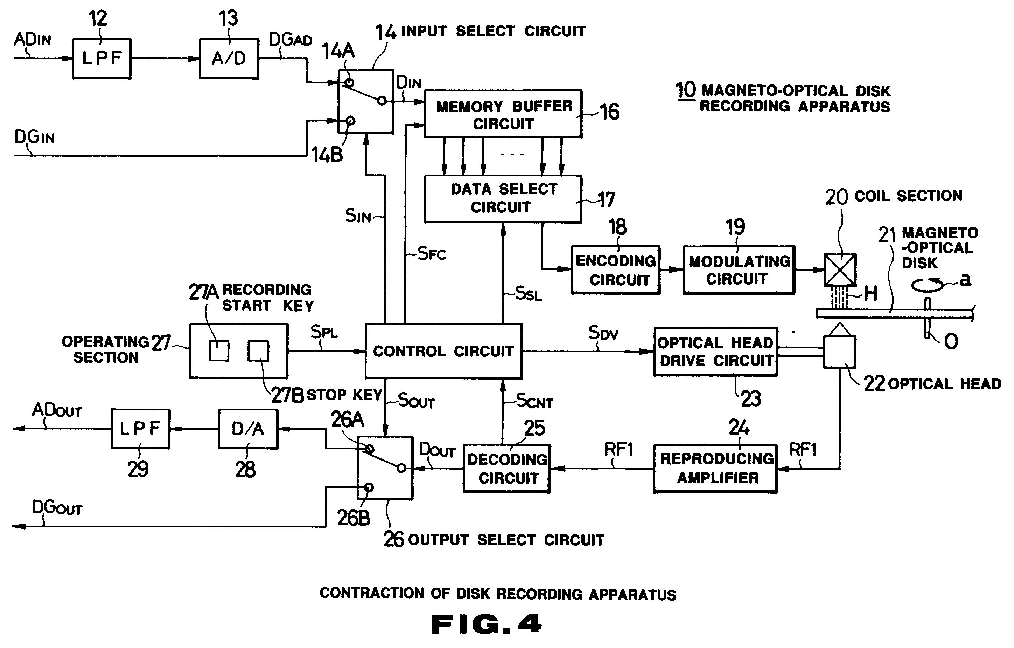

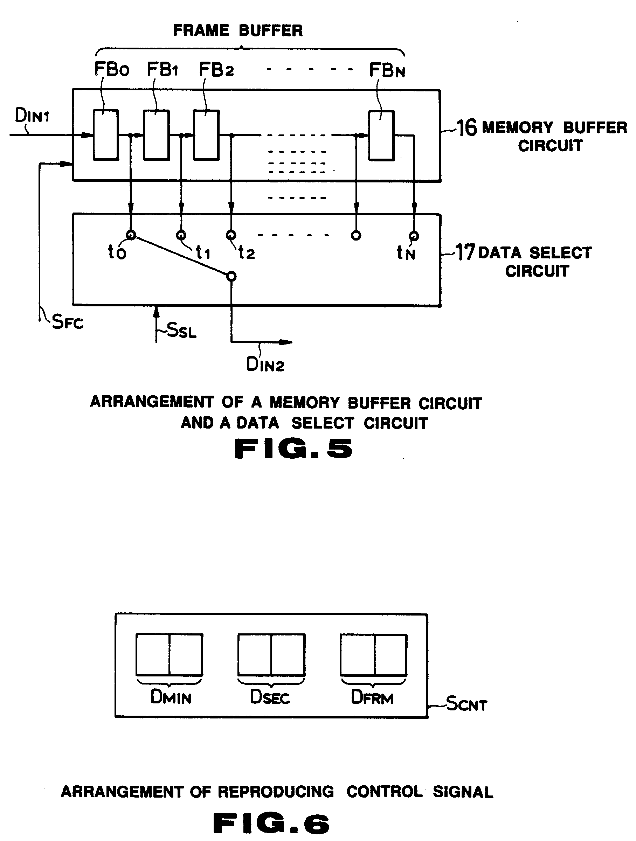

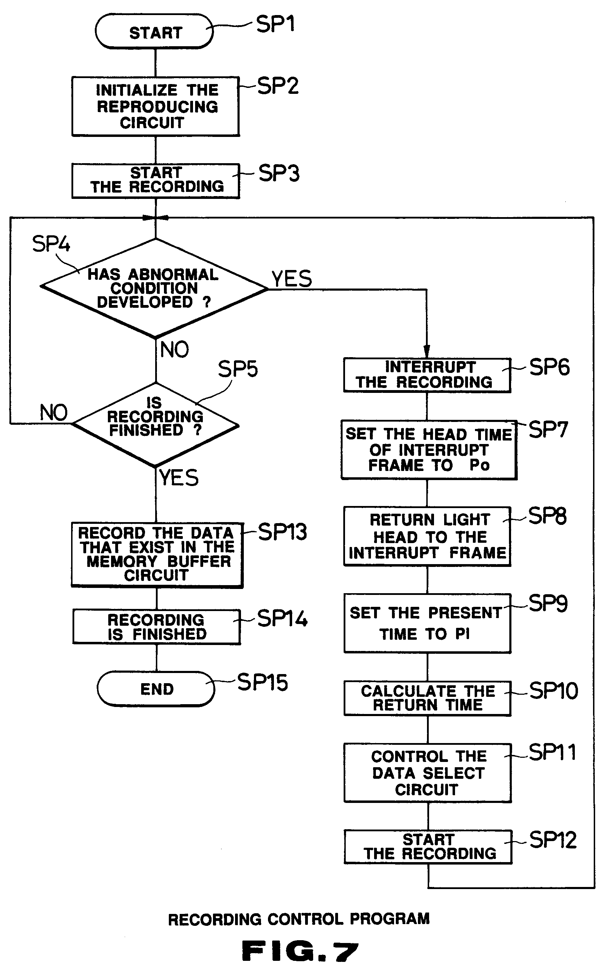

Fig. 4 is a block diagram showing an embodiment of disk recording apparatus according to the present invention; Fig. 5 is a diagrammatic view showing the arrangement of a memory buffer circuit and a data select circuit in the above embodiment; Fig. 6 is a diagrammatic view showing the arrangement of reproducing control signals in the above embodiment; and Fig. 7 is a flowchart showing the recording control program.

In Fig. 4, 10 designates in general a magneto-optical disk recording apparatus of the present invention. Input audio signals AD_{IN} are converted into digital data DG_{AD} in an analog-to-digital converting circuit 13 via a low pass filter 12 so as to be transmitted to a first input terminal 14A of an input select circuit 14.

Input digital data DG_{IN} are entered directly at a second input terminal 14B of the input select circuit 14 and switching is effected between the first input terminal 14A and the second input terminal 14B based on an input select signal S_{IN} applied to a control terminal of the input select circuit 14 from a control circuit 15, which comprises a computer, in such a manner that a selected one of the two input digital data DG_{AD} and DG_{IN} is transmitted as digital data D_{IN} to an encoding circuit 18 via a memory buffer circuit 16 and a data select circuit 17.

As shown in Fig. 5, the memory buffer circuit 16 is formed by a number of series-connected frame buffers FB₀, FB₁, FB₂, ... , FB_{N}, with each frame buffer having a data storage capacity corresponding to one unit of digital data D_{IN} to be recorded on the recording track, herein to 98 frames, or one large frame, in the aforementioned CD standard. The memory buffer circuit 16 is designed to divide the input digital data D_{IN} at one frame intervals according to the timing of frame clock signals S_{FC} supplied by the control circuit 15. A buffer memory of the first-in first-out (FIFO) type random access memory (RAM) is used as each of the frame buffer memories FB₀, FB₁, FB₂, ..., F_{BN}.

The digital data transmitted from each of the frame buffers FB₀, FB₁, FB₂, etc making up the memory buffer circuit 16 are supplied to the next frame buffer FB₁, FB₂, FB₃ etc at the timings of the frame clock signals S_{FC}, while being transmitted to the input terminals t₀, t₁, t₂, ... , t_{N} of the data select circuit 17.

The data select circuit 17 is formed by, for example, an analog switch, and, based on a data select signal S_{SL} supplied by the control circuit 15, selects one of the input terminals t₀, t₁, t₂, ... , t_{N}, so that, as digital data D_{IN1} is supplied to the memory buffer circuit 16, digital data a predetermined time in advance in terms of the units of the aforementioned frame clock signal S_{FC} are transmitted as digital data D_{IN2} to the following encoding circuit 18.

The encoding circuit 18 encodes the digital data D_{IN2} supplied thereto from the data select circuit 17 and the encoded data are modulated in accordance with a predetermined modulation system by the following modulating circuit 19. The modulated encoded data are supplied to a coil section 20 where a magnetic field H, switched in accordance with the digital data D_{IN}, is applied to the magneto-optical disk 21 which is rotated about a spindle O at its centre as indicated by the arrow marked a.

On the lower surface of the magneto-optical disk 21, and in register with the coil section 20, there is arranged an optical head 22 for irradiating the recording laser output on a predetermined one of the recording tracks, such that the digital data D_{IN} may be recorded by the coil section 20 and the optical head 22 on the magneto-optical disk 21 in accordance with the magnetic field modulation recording system.

The optical head 22 has a focussing servo circuit and a tracking servo circuit in its interior and is adapted to be slid in a direction transverse to the recording tracks on the magneto-optical disk 21 by an optical head drive circuit 23 which is controlled by a drive signal S_{DV} supplied from the control circuit 15.

In the illustrative embodiment, control signals S_{CNT}, such as the absolute time or absolute address information from the leading end of the recording track, are recorded as the sub-code in the above-described compact disk standard on the recording track of the magneto-optical disk 21 by so-called groove wobbling, that is, by vibration of the groove of the recording track in a direction radially of the disk. The control signals S_{CNT} recorded by the above described groove wobbling can be extracted as the difference in the detected outputs of a detector which is divided in two along the track direction, that is, as push-pull signals, since the return light of the light spot from the optical head 22 scanning the wobbled groove is diffracted by the wobbled groove so as to be modulated in light intensity at the detector of the optical head 22.

The arrangement is so made that, when recording the digital data D_{IN}, the return light from the magneto-optical disk 21 is received by the optical head 22 and supplied as a reproducing signal RF₁ to a decoding circuit 25 via a reproducing amplifier 24.

The decoding circuit 25 converts the reproducing signal RF₁ into digital data D_{OUT} and transmits the digital data to an output select circuit 26, while extracting a reproducing control signal S_{CNT} from the reproducing signal RF₁ and transmitting the signal S_{CNT} to the control circuit 15.

As shown in Fig. 6, the reproducing control signal S_{CNT} is associated with each frame of the digital data to be recorded and is composed of minute data D_{MIN}, second data D_{SEC} and frame data D_{FRM}, each consisting of eight bits, for example, and is designed to represent as a whole a position on the recording track on the magneto-optical disk 21.

On the basis of the output select signal S_{OUT} supplied from the control circuit 15, the output select circuit 26 selectively outputs the input digital data D_{OUT} to a first output terminal 26A or a second output terminal 26B.

The digital data D_{OUT} output via the first output terminal 26A of the output select circuit 26 are converted by a digital-to-analog converter 28 into analog data which are supplied as output analog data AD_{OUT} via a low pass filter 29. The digital data D_{OUT} output via the second output terminal 26B of the output select circuit 26 are supplied directly as output digital data D_{OUT}.

It is noted that an operating section 27, having a recording start key 27A and a stop key 27B, arranged as a push-pull switch, is connected to the control circuit 15.

The control circuit 15 starts the recording operation by executing the record control program shown in Fig. 7 at the time of entry of an operation control signal S_{PL} indicating that the recording start key 27A of the operating section 27 has been actuated and performs a control operation in such a manner as to prevent loss of data even when an abnormal condition such as incorrect focussing servo control or track jump occurs in the optical head 22 during data recording.

After initiation of the control operation by the record control program at a first step SP1, the control circuit 15 sends a data select signal S_{SL,} selecting the leading input terminal t₀, to the data select circuit 17 at the second step SP2, to start the recording operation at the third step SP3.

At this time, the input digital data D_{IN} are divided at frame intervals by the frame clock signals S_{FC} so as to be transmitted from the leading frame buffer FB₀ to the data select circuit 17 and recorded on the recording track on the magneto-optical disk 21. In practice, the digital data D_{IN} stored in the leading frame buffer FB₀ are sequentially stored in the subsequent frame buffers FB₁, FB₂, ... , FB_{N}, at the timing of the frame clock signals S_{FC}.

The control circuit 15 then proceeds to the fourth step SP4 to monitor the continuity of the recording track on the magneto-optical disk 21 on the basis of the reproducing control signal S_{CNT} supplied from the decoding circuit 25, and makes a decision, based on the results of the monitoring, as to whether an abnormal condition such as incorrect focussing servo control or track jump has occurred.

When a negative decision is obtained at the fourth step SP4, the control circuit 15 proceeds to the fifth step SP5 and decides whether an operation control signal S_{PL} indicating actuation of the stop key 27B has been received.

When a negative decision, that is, a decision to the effect that the recording operation should be continued, is obtained at the fifth step SP5, the control circuit 15 reverts to the fourth step SP4 to repeat the loop of the steps SP4 and SP5 to continue the recording operation until the stop key 27B is actuated by the user, whilst continuing to monitor the continuity of the recording track on the magneto-optical disk 21. When an affirmative result, indicating that an abnormal condition such as incorrect focussing servo control or track jump has occurred, is obtained in the fourth step SP4, the control circuit 15 proceeds to the sixth step SP6 to control the optical head 22 to cause it to issue a reproducing laser output to interrupt the recording operation. In the seventh step SP7, the control circuit 15 stores the time data from the recording track corresponding to the frame in which recording interruption occurred in a first storage area P₀ in the control circuit.

In the eighth step SP8, the control circuit 15 supplies a drive signal S_{DV}, such as a track jump signal, to the optical head drive circuit 23 to return the beam spot from the optical head 22 to the leading position of the frame where the recording interruption occurred. In the next ninth step SP9, the control circuit 15 stores the current time in a second storage area P₁ thereof.

In the next tenth step SP10, the control circuit 15 calculates, using the respective time data stored in the first storage area P₀ and in the second storage area P₁, the return time required since the occurrence of the abnormal condition for the beam spot from the optical head 22 to return to the leading end of the frame where the recording interruption occurred. In the eleventh step SP11, the control circuit 15 sends a data select signal S_{SL} to cause the data select circuit 17 to select that one of the input terminals t₁, t₂, ... , t_{N} which is in advance of the previously selected input t₀ by the number of the frames corresponding to the calculated return time.

In the twelfth step SP12, the control circuit 15 controls the optical head 22 to cause it to issue the recording laser output to resume the recording operation to return to the loop of the aforementioned fourth step SP4 and fifth step SP5.

It will be appreciated from the foregoing that the control circuit 15 executes the aforementioned sixth to twelfth steps SP6, SP7, SP8, SP9, SP10, SP11 and SP12, in such a manner that, when an abnormal condition such as incorrect focussing servo control or track jump of the optical head 22 has occurred, the control circuit causes the optical head 22 to be returend to a position on the magneto-optical disk 21 corresponding to the leading end of the frame where the abnormal condition occurred, and the control circuit resumes the recording operation on the magneto-optical disk 21 from that one of the frame buffers FB₁, FB₂, ... , FB_{N} which is in advance by the number of the frames corresponding to the time involved during this procedure, so that recording may be effected without data loss even on occurrence of an abnormal condition.

When an affirmative result, indicating that the stop key 17B has been actuated, is obtained at the fifth step SP5, the control circuit 15 proceeds to the thirteenth step SP13 and causes, when the data select circuit 17 has selected a frame buffer FB1, FB2, ... , FB_{N} other than the leading frame buffer FB₀, the digital data D_{IN} stored in the frame buffers FB₀, FB₁, FB₂, ... , FB_{N} to be stored on the magneto-optical disk 21. The control circuit 15 then causes the recording operation to be terminated at the fourteenth step SP14 and terminates the recording control program at the fifteenth step SP15.

In the above arrangement, there may be realized a magneto-optical disk recording apparatus in which, even when an abnormal condition such as incorrect focussing servo control or track jump should occur in the optical head during data recording, data recording may be made correctly without loss of the recording data.

Although a magneto-optical disk on which the absolute time information from the leading end is recorded by land wobbling is used in the illustrative embodiment, the absolute address information is not limited thereto, but may also be address numbers, for example, while, as the recording method, recording pits may be formed on the recording tracks, or recording may be made by groove wobbling. An effect similar to that described in the above illustrative embodiment may be realized if absolute address information such as time data or address number can be reproduced from the recording track.

In addition, although the illustrative embodiment has been described with reference to a compact disk type magneto-optical disk apparatus, the present invention is not limited thereto, but may be extensively applied to other types of recording apparatus such as for optical or magnetic disks.

## Claims

1. Disk recording apparatus (10) in which predetermined input data (D_{IN}) are recorded on a disk-like recording medium (21) on a recording track of which predetermined absolute address information (S_{CNT}) is recorded in advance, the apparatus comprising: memory means (16) for storing said input data (D_{IN}); memory control means (15) for controlling storage of the input data (D_{IN}) in the memory means (16) and reading of the input data (D_{IN}) from the memory means (16): recording means (20, 22) for recording the input data read out from the memory means (16) on the medium (21); and abnormal condition detection and control means (22, 25, 15) for detecting an abnormal condition during a recording operation; characterised in that
the memory means (16) comprises a plurality of series-connected first-in-first-out buffer memories (FB_{O}-FB_{N}) each having a data storage capacity corresponding to a predetermined recording unit of said input data (D_{IN1}) and each having an output connected to a corresponding input (t₀-t_{N}) of a data select circuit (17) which, under control of the memory control means (15), selectively outputs data (D_{IN2}) supplied to one of its inputs (t₀-t_{N}) for supply to the recording means (20, 22); and in that the abnormal condition detection and control means (22, 25, 15) is arranged to monitor said absolute address information (S_{CNT}) on said recording track during a recording operation, to detect an abnormal condition based on said absolute address information (S_{CNT}), and to calculate, on occurrence of said abnormal condition, the return time required for said recording means (20, 22) to return to the leading position of the recording unit that is being recorded on the track, the memory control means (15) being arranged to control the data select circuit (17) to output data (D_{IN2}) from the input (t₀-t_{N}) thereof which is in advance of the previously selected input (t₀-t_{N}) by a number of said recording units corresponding to the calculated return time.

2. Disk recording apparatus as claimed in claim 1, wherein absolute address information (S_{CNT}) corresponding to each said predetermined recording unit is recorded in advance on the recording track of the medium (21) as control signals, the abnormal condition detection and control means (22, 25, 15) being arranged to detect an abnormal condition during the recording operation by reproducing the control signals from the recording track.

3. Disk recording apparatus as claimed in claim 2, wherein the input data (D_{IN}) are recorded on the medium (21) in accordance with a magnetic field modulation system, and said control signals (S_{CNT}) are recorded in advance by groove wobbling.

4. Disk recording apparatus as claimed in claim 2, wherein said control signals (S_{CNT}) are reproduced by a one-beam optical head (22), and the input data (D_{IN}) are recorded by magnetic field modulation on a magneto-optical recording medium (21).

5. Disk recording apparatus as claimed in claim 1, wherein the recording means (20, 22) comprises an optical head (22) for scanning the recording track of the medium (21) by means of a light beam to record or reproduce data, and wherein the abnormal condition detection and control means (22, 25, 15) is arranged to switch the laser power of said optical head (22) to the reproducing level on detection of an abnormal condition during the recording operation.

6. Disk recording apparatus as claimed in any preceding claim, wherein the said predetermined recording unit of the input data (D_{IN}) is one frame of the input data (D_{IN}).

7. Disk recording apparatus as claimed in any preceding claim, wherein the data select circuit (17) comprises an analog switch.

## Patentansprüche

1. Plattenaufzeichnungsvorrichtung (10), bei welcher vorgegebene Eingabedaten (D_{IN}) auf einem plattenähnlichen Aufzeichnungsmedium (21) auf einer Aufzeichnungsspur aufgezeichnet werden, bei denen eine vorgegebene absolute Adresseninformation (S_{CNT}) im voraus aufgezeichnet wird, wobei die Vorrichtung umfaßt: eine Speichereinrichtung (16) zum Speichern der Eingabedaten (D_{IN}); eine Speichersteuereinrichtung (15) zur Steuerung der Speicherung der Eingabedaten (D_{IN}) in die Speichereinrichtung (16) und zum Lesen der Eingabedaten (D_{IN}) aus der Speichereinrichtung (16); eine Aufzeichnungseinrichtung (20, 22) zum Aufzeichnen der aus der Speichereinrichtung (16) ausgelesenen Eingabedaten auf das Medium (21); und eine Einrichtung (22, 25, 15) zur Detektion eines anormalen Zustandes und zur Steuerung zum Feststellen eines anormalen Zustandes während eines Aufzeichnungsbetriebs; dadurch gekennzeichnet,
daß die Speichereinrichtung (16) eine Vielzahl von FIFO(first-in-first-out)-Pufferspeichern (FB₀-FB_{N}) aufweist, von denen jeder eine Speicherkapazität gemäß einer vorgegebenen Aufzeichnungseinheit der Eingabedaten (D_{IN1}) besitzt und von denen jeder einen mit einem entsprechenden Eingang (t₀-t_{N}) einer Datenauswahlschaltung (17) verbundenen Ausgang besitzt, welche unter der Steuerung der Speichersteuereinrichtung (15) selektiv Daten (D_{IN2}), welche an einem ihrer Eingänge (t₀-t_{N}) bereitgestellt worden sind, zur Bereitstellung an die Aufzeichnungseinrichtung (20, 22) ausgibt; und daß die Einrichtung (22, 25, 15) zur Detektion eines anormalen Zustandes und zur Steuerung eingerichtet ist, die absolute Adresseninformation (S_{CNT}) auf der Aufzeichnungsspur während eines Aufzeichnungsbetriebs zu überwachen, einen anormalen Zustand beruhend auf der absoluten Adresseninformation (S_{CNT}) festzustellen, und bei Auftreten des anormalen Zustandes die für die Aufzeichnungseinrichtung erforderliche Rückkehrzeit zu berechnen, um zu der vorderen Position derAufzeichnungseinheit, welche auf der Spur aufgezeichnet wird, zurückzukehren, wobei die Speichersteuereinrichtung (15) veranlaßt wird, die Datenauswahlschaltung (17) zu steuern, um Daten (D_{IN2}) von demjenigen ihrer Eingänge (t₀-t_{N}) auszugeben, welcher um eine Anzahl von Aufzeichnungseinheiten, welche der berechneten Rückkehrzeit entspricht, vor dem vorhergehend ausgewählten Eingang (t₀-t_{N}) liegt.

2. Plattenaufzeichnungsvorrichtung nach Anspruch 1, bei der die jeder vorgegebenen Aufzeichnungseinheit entsprechende absolute Adresseninformation (S_{CNT}) im voraus auf der Aufzeichnungsspur des Mediums (21) als Steuersignale aufgezeichnet wird, wobei die Einrichtung (22, 25, 15) zur Detektion eines anormalen Zustandes und zur Steuerung veranlaßt wird, einen anormalen Zustand während des Aufzeichnungsbetriebs durch Wiedergabe der Steuersignale von der Aufzeichnungsspur festzustellen.

3. Plattenaufzeichnungsvorrichtung nach Anspruch 2, bei der die Eingangsdaten (D_{IN}) auf dem Medium (21) gemäß einem System zur Modulation eines magnetischen Feldes aufgezeichnet werden und die Steuersignale (S_{CNT}) im voraus durch Auslenken einer Rille aufgezeichnet werden.

4. Plattenaufzeichnungsvorrichtung nach Anspruch 2, bei der die Steuersignale (S_{CNT}) mittels eines einstrahligen optischen Kopfes (22) wiedergegeben werden und die Eingabedaten (D_{IN}) mittels Modulation eines magnetischen Feldes auf einem magnetooptischen Aufzeichnungsmedium (21) aufgezeichnet werden.

5. Plattenaufzeichnungsvorrichtung nach Anspruch 1, bei der die Aufzeichnungseinrichtung (20, 22) einen optischen Kopf (22) zum Abtasten der Aufzeichnungsspur auf dem Medium (21) mittels eines Lichtstrahls aufweist, um Daten aufzuzeichnen oder wiederzugeben, und bei der die Einrichtung (22, 25, 15) zur Detektion eines anormalen Zustandes und zur Steuerung eingerichtet ist, die Laserleistung des optischen Kopfes (22) bei Feststellung eines anormalen Zustandes während des Aufzeichnungsbetriebs auf den Wiedergabelevel umzuschalten.

6. Plattenaufzeichnungsvorrichtung nach einem der vorhergehenden Ansprüche, bei der die vorgegebene Aufzeichnungseinheit der Eingabedaten (D_{IN}) ein Datenrahmen der Eingabedaten (D_{IN}) beträgt.

7. Plattenaufzeichnungsvorrichtung nach einem der vorhergehenden Ansprüche, bei der die Datenauswahlschaltung (17) einen analogen Schalter aufweist.

## Revendications

1. Dispositif d'enregistrement sur disque (10) dans lequel des données prédéterminées d'entrée (D_{IN}) sont enregistrées sur un support d'enregistrement en forme de disque (21) sur une piste d'enregistrement dont l'information prédéterminée d'adresse absolue (S_{CNT}) est enregistrée à l'avance, dispositif comprenant un moyen de mémoire (16) pour le stockage desdites données d' entrée (D_{IN}), un moyen de commande de mémoire (15) pour commander le stockage des données d'entrée (D_{IN}) dans le moyen de mémoire (16) et la lecture des données d'entrée (D_{IN}) à partir du moyen de mémoire (16), un moyen d'enregistrement (20, 22) pour l'enregistrement des données d'entrée extraites du moyen de mémoire (16) sur le support (21) et des moyens de détection et de commande de condition anormale (22, 25, 15) pour détecter une condition anormale lors d'une opération d'enregistrement,
dispositif caractérisé en ce que le moyen de mémoire (16) comprend une pluralité de mémoires de tampon (FB₀ à FB_{N}) montées en série du type premier entré, premier sorti, possédant chacune une capacité de stockage de données correspondant à une unité prédéterminée d'enregistrement desdites données d'entrée (D_{IN1}) et possédant chacune une sortie raccordée à une entrée correspondante (t₀ à t_{N}) d'un circuit de sélection de données (17) qui, sous la commande du moyen de commande de mémoire (15), génère, de façon sélective, des données (D_{IN2}) fournies à une de ses entrées (t₀ à t_{N}) pour alimenter le moyen d'enregistrement (20, 22) et en ce que les moyens de détection et de commande de condition anormale (22, 25, 15) sont agencés pour contrôler ladite information d'adresse absolue (S_{CNT}) sur ladite piste d'enregistrement lors d'une opération d'enregistrement afin de détecter une condition anormale sur la base de ladite information d'adresse absolue (S_{CNT}) et de calculer, lors de l'apparition de ladite condition anormale, le temps de retour requis pour ledit moyen d'enregistrement (20, 22) pour revenir sur la position avant de l'unité d'enregistrement enregistrée sur la piste, le moyen de commande de mémoire (15) étant agencé pour commander le circuit de sélection des données (17) afin de générer des données (D_{IN2}) à partir de l'entrée (t₀ à t_{N}) qui sont en avance sur l'entrée choisie précédemment (t₀ à t_{N}) du nombre desdites unités d'enregistrement correspondant au temps de retour calculé.

2. Dispositif d'enregistrement sur disque selon la revendication 1, dans lequel l'information d'adresse absolue (S_{CNT}) correspondant à chaque dite unité prédéterminée d'enregistrement est enregistrée à l'avance sur la piste d'enregistrement du support (21) comme signaux de commande, les moyens de détection et de commande de condition anormale (22, 25, 15) étant agencés pour détecter une condition anormale lors de l'opération d'enregistrement par lecture des signaux de commande de la piste d'enregistrement.

3. Dispositif d'enregistrement sur disque selon la revendication 2, dans lequel les données d'entrée (D_{IN}) sont enregistrées sur le support (21) selon un système de modulation du champ magnétique et lesdits signaux de commande (S_{CNT}) sont enregistrés à l'avance par mise en vibrations de gorge.

4. Dispositif d'enregistrement sur disque selon la revendication 2, dans lequel lesdits signaux de commande (S_{CNT}) sont lus par une tête optique à un faisceau (22) et les données d'entrée (D_{IN}) sont enregistrées par modulation du champ magnétique sur un support d'enregistrement magnéto-optique (21).

5. Dispositif d'enregistrement sur disque selon la revendication 1, dans lequel le moyen d'enregistrement (20, 22) comprend une tête optique (22) pour le balayage de la piste d'enregistrement du support (21) au moyen d'un faisceau lumineux pour enregistrer ou pour lire des données et dans lequel les moyens de détection et de commande de condition anormale (22, 25, 15) sont agencés pour commuter la puissance de laser de ladite tête optique (22) sur le niveau de lecture lors de la détection d'une condition anormale pendant l'opération d'enregistrement.

6. Dispositif d'enregistrement sur disque selon l'une quelconque des revendications précédentes, dans lequel ladite unité prédéterminée d'enregistrement des données d'entrée (D_{IN}) est une trame des données d'entrée (D_{IN}).

7. Dispositif d'enregistrement sur disque selon l'une quelconque des revendications précédentes, dans lequel le circuit de sélection de données (17) comprend un commutateur analogique.
